# EUROPÄISCHE PATENTSCHRIFT

(11) **EP 3 473 631 B1**
(45) Veröffentlichungstag und Bekanntmachung des Hinweises auf die Patenterteilung: **08.01.2020**
(21) Anmeldenummer: 17197233.4
(22) Anmeldetag: 19.10.2017
(51) Int. Cl.: C07F 7/18, C08K 5/5415

(54) **NEUE EPOXY-FUNKTIONELLE ALKOXYSILANE, VERFAHREN ZU DEREN HERSTELLUNG UND DEREN VERWENDUNG**
NEW EPOXY-FUNCTIONAL ALKOXYSILANES, METHOD FOR THEIR PREPARATION AND THEIR USE
NOUVEAUX ALCOXYLESILANES À FONCTION ÉPOXY, LEUR PROCÉDÉ DE FABRICATION ET LEUR UTILISATION

(43) Veröffentlichungstag der Anmeldung: 24.04.2019
(73) Patentinhaber: Evonik Operations GmbH, 45128 Essen (DE)
(72) Erfinder: Rudek, Markus, 79639 Grenzach-Whylen (DE); Witzsche, Susann, 79618 Rheinfelden (DE); Bade, Stefan, 68220 Michelbach Le Haut (FR); Standke, Burkhard, 79540 Lörrach (DE); Störger, Reiner, 63500 Seligenstadt (DE)
(74) Vertreter: Evonik Patent Association

(56) Entgegenhaltungen:
- KR-A-020130 109 747
- US-A- 3 455 877

## Beschreibung

Die vorliegende Erfindung betrifft neue Epoxy-funktionelle Alkoxysilane oder Epoxy-funktionelle Alkoxysilangemische, Verfahren zu deren Herstellung und deren Verwendung.

Die Hydrosilylierung von Olefinen in Gegenwart eines Katalysators sind lange bekannt und wichtige Verfahren zur Herstellung organofunktioneller Silane.

Aus DE 2851456 geht ein kontinuierliches Hydrosilylierungsverfahren hervor, das in einem von Flüssigphase der Komponenten durchströmten Rohrreaktor in Gegenwart eines in homogener Phase eingesetzten Hydrosilylierungskatalysators bei einem Druck bis 6 bar abs. betrieben wird.

Die Herstellung von 3-Glycidyloxypropyltrialkoxysilanen erfolgt üblicherweise homogenkatalytisch mit einem Speier-Katalysator, H₂PtCl₆, oder einem Karstedt-Katalysator, Divinyltetramethyldisiloxan-Pt, sie kann aber auch heterogenkatalytisch mit Edelmetallen erfolgen (u.a. EP 0277023, EP 0288286, EP 1070721, JP 128763, DE 2159991 sowie EP 0548974, US 4736049).

EP 0075864 sowie EP 0075865 betreffen die Herstellung von Hexafluorpropyloxy- sowie Tetrafluorethyloxyalkylsilanen durch Hydrosilylierung in Gegenwart eines Hydrosilylierungskatalysators, wobei fluorfunktionelle Olefinether als Olefinkomponente eingesetzt werden. Auch diese Verfahren werden in einem von Flüssigphase durchströmten Rohrreaktor bei einem Druck bis 6 bar abs. kontinuierlich durchgeführt.

Da gemäß EP 0652222 ein Pt-Katalysator bzw. Pt(0)-Komplexkatalysator, der gegebenenfalls in einem inerten Lösemittel gelöst eingesetzt werden kann, alleine nicht aktiv genug ist, muss ein sogenannter Promotor in Form eines Peroxids zur Aktivierung des Katalysators verwendet werden, um die Wirtschaftlichkeit zu verbessern.

EP 0856517 offenbart einen Prozess zur Hydrosilylierung einer ungesättigten Verbindung in Anwesenheit einer Metallverbindung der 8. bis 10. Nebengruppe des Periodensystems der Elemente. Die Hydrosilylierung muß ebenfalls in Anwesenheit eines Beschleunigers durchgeführt werden.

SU 415268 lehrt, Aminoalkylsilane durch Hydrosilylierung von Allylamin herzustellen, wobei auch hier die Umsetzung in Gegenwart eines Katalysators und unter Zusatz einer Säure als Promotor, u.a. Essigsäure, durchzuführen ist.

Weiter offenbart EP 0985675 den Einsatz einer Säure als Promotor bei der Hydrosilylierung eines Kohlenwasserstoffolefins zur Herstellung von Alkylsilanen. In EP 0985675 wird Essigsäure als bevorzugte Säure angeführt, vgl. auch US 5986124 oder EP 2114963.

JP 4266400B beschreibt die Herstellung einer aromatischen Silanverbindung durch Hydrosilylierung einer aromatischen Vinylverbindung. Als Katalysator wird ein Platinkomplex in Anwesenheit einer Carbonsäure eingesetzt.

EP 0587462 beschreibt eine Zusammensetzung aus einem ungesättigten Polyorganosiloxan, einem Organowasserstoffpolysiloxan, einer Säure, einer Platinverbindung sowie Additiven, wobei die Komponenten in Wasser emulgiert und zur Trennschichtbehandlung eingesetzt werden. Die Vernetzung über eine Hydrosilylierung erfolgt beim Erwärmen.

Es ist jedoch allgemein bekannt, dass sich ein Oxiran-Ring in der Regel unter Einfluss einer Säure öffnet und so eine sehr reaktive Spezies darstellt. Die Öffnung des Oxiran-Rings erfolgt hierbei sowohl durch Säurekatalyse als auch durch beliebige andere Nucleophile. (S. Hauptmann, "Organische Chemie", 1. Aufl. 1985, VEB Verlag für Grundstoffindustrie, Leipzig, Seiten 558ff).

EP 0838467 lehrt, dass man die Olefinkomponente und den Pt(0)-Komplexkatalysator gelöst in Xylol oder Toluol vorlegt und das Hydrogenchlorsilan bei Raumtemperatur zudosiert, wobei die Temperatur sprunghaft auf rd. 120 °C und mehr ansteigt. Die Olefin- und Hydrogenchlorsilankomponenten werden hier in einem molaren Verhältnis von ≤ 1 : 1 eingesetzt. Das Verfahren kann auch unter Druck durchgeführt werden. Sofern eine Umsetzung nach einem der genannten Verfahren nicht anspringt, ist in der Regel der gesamte Ansatz unbrauchbar und muss verworfen werden, - einschließlich der hochpreisigen Olefin-Komponente.

US 2013/0158281 offenbart einen Prozess zur Hydrosilylierung einer ungesättigten Verbindung mit einem Silylhydrid. Als Katalysator werden Fe-, Ni-, Mn- oder Co-Komplexe verwendet.

US 3,455,877 beschreibt Glycidyloxypropylalkoxy(dialkyl)silane und entsprechende Siloxane. Beispielhaft wird die Herstellung eines spezifischen Di-(Glycidyloxymethyl)dialkoxyalkylsilans offenbart, wobei der Sauerstoff an der Verzweigungsposition drei kovalente Bindungen ausbilden muß.

Bereits die zuvor dargelegte Auswahl zum Stand der Technik zeigt, daß jede Verfahrensweise bei der Hydrosilylierung eine besondere Herausforderung darstellt und in der Regel der von der Natur vorgesehene wirkliche Verlauf der Dinge unvorhersehbar ist, insbesondere je komplizierter die Verbindungen.

Der vorliegenden Erfindung lag die Aufgabe zugrunde, neue Epoxy-funktionelle Alkoxysilane bereitzustellen. Insbesondere bestand das Problem die Verbindung gemäß Formel I 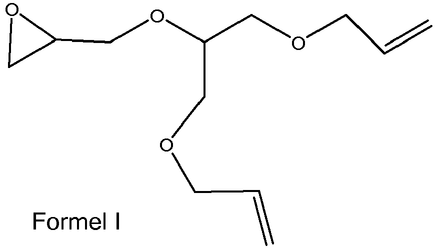 (nachfolgend auch kurz "Neoallyl-AGE" genannt) nach Möglichkeit bezüglich seiner beiden olefinischen Gruppen zu hydrosilylieren und dass dabei die Epoxyfunktion des Neoallyl-AGE's im Wesentlichen erhalten bleibt.

Die gestellte Aufgabe wird erfindungsgemäß entsprechend den Merkmalen der Patentansprüche gelöst.

Überraschenderweise wurde gefunden, dass man
- eine Epoxy-funktionelle Verbindung der Formel I (nachfolgend neben Neoallyl-AGE zusätzlich auch kurz Olefin oder Olefinkomponente oder Verbindung gemäß Formel I genannt), 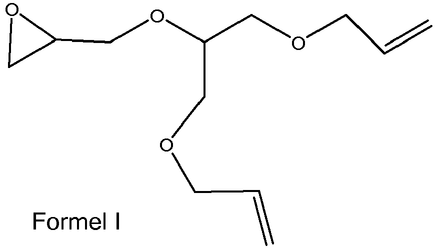
- mit einem Hydrogentrialkoxysilan, das man geeigneterweise in einem molaren Überschuß einsetzt,
- in Gegenwart eines Edelmetall-haltigen Hydrosilylierungskatalysators,
- optional unter Zusatz mindestens eines Löse- bzw. Verdünnungsmittels
- sowie optional unter Zusatz eines Promotors, auch Cokatalysator genannt,
- umsetzt und
- so vorteilhaft mindestens ein Hydrosilylierungsprodukt in Form eines neuen Epoxy-funktionellen Alkoxysilans der Formeln II, III, IV, V und/oder VI 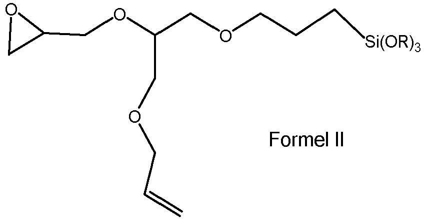 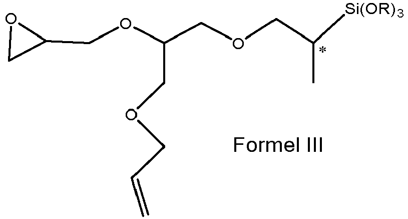 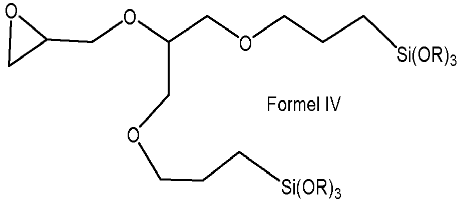 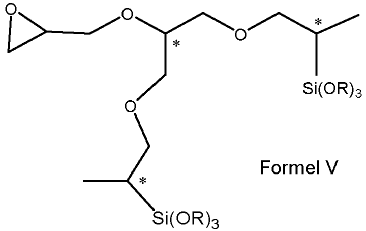 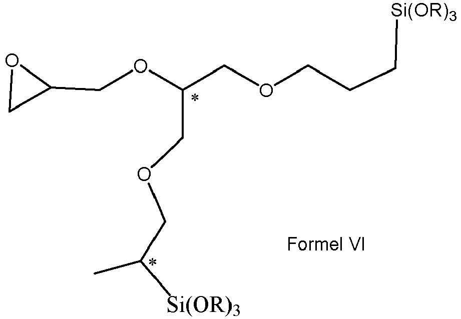
wobei R jeweils für eine Methyl- oder Ethylgruppe steht (Anmerkung: in den vorangehenden Formeln sind chirale Zentren der betreffenden Verbindungen mit * gekennzeichnet),

unter Erhalt der Epoxyfunktion erhält und vorteilhaft neue Epoxy-funktionelle Alkoxysilane diverser Applikationsmöglichkeiten bereitstellen kann.

Gegenstand der vorliegenden Erfindung sind somit Epoxy-funktionelle Alkoxysilane der Formeln II, III, IV, V und/oder VI 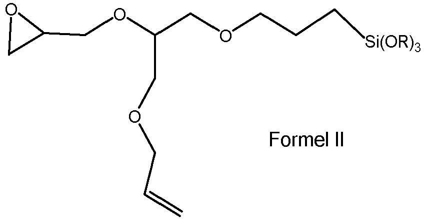 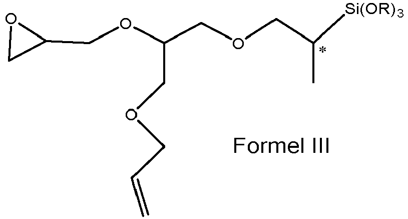 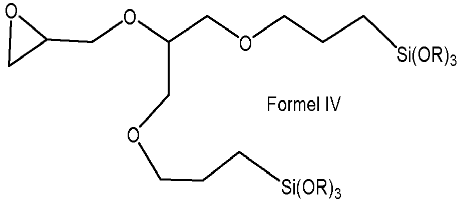 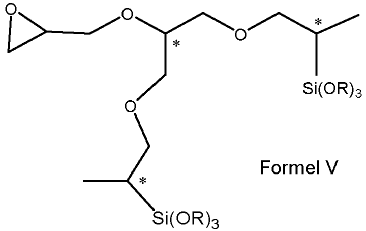 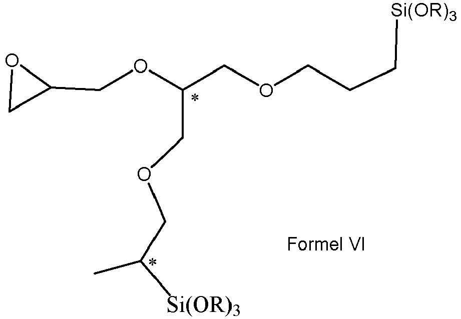 wobei R für eine Methyl- oder Ethylgruppe steht.

Gegenstand der vorliegenden Erfindung ist ferner ein Verfahren zur Herstellung mindestens eines Epoxy-funktionellen Alkoxysilans der bereits zuvor dargestellten Formeln II, III, IV, V oder VI oder eines Gemisches von mindestens zwei Epoxy-funktionellen Alkoxysilanen der Formeln II, III, IV, V und/oder VI, indem man
- eine Epoxy-funktionelle Verbindung der Formel I (nachfolgend auch kurz Olefin oder Olefinkomponente oder Verbindung gemäß Formel I genannt) 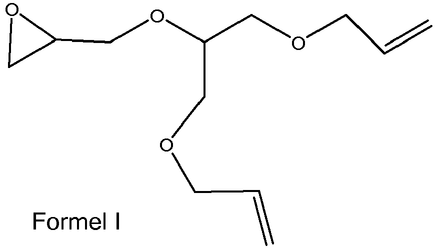
- mit einem Hydrogentrialkoxysilan
- in Gegenwart eines Edelmetall-haltigen Hydrosilylierungskatalysators,
- optional unter Zusatz mindestens eines Löse- bzw. Verdünnungsmittels
- sowie optional unter Zusatz eines Promotors
- umsetzt und
- anschließend das Hydrosilylierungsprodukt gewinnt,
wobei die Bezeichnung "das Hydrosilylierungsprodukt" gleichzeitig auch ein Gemisch aus Hydrosilylierungsprodukten sowie ein Hydrosilylierungsprodukt als solches einschließt.

Dabei setzt man als Hydrogentrialkoxysilan bevorzugt Hydrogentrimethoxysilan (TMOS) oder Hydrogentriethoxysilan (TEOS) ein.

Weiter setzt man beim erfindungsgemäßen Verfahren die Olefinkomponente, d.h. Verbindung gemäß Formel I zu Hydrogentrialkoxysilan vorteilhaft in einem molaren Verhältnis von 1 zu 0,8 bis 1 zu 100 ein, vorzugsweise 1 zu 1,8 bis 1 zu 50, besonders vorzugsweise 1 zu 2 bis 1 zu 20, ganz besonders vorzugsweise 1 zu 2,2 bis 1 zu 10, insbesondere 1 zu 2,5 bis 1 zu 5.

Ferner führt man beim erfindungsgemäßen Verfahren die Umsetzung geeigneterweise in Gegenwart eines Edelmetall-haltigen Hydrosilylierungs-katalysators aus der Reihe Pt, Pd, Rh durch, wobei dieser homogen oder heterogen vorliegen kann. Bevorzugt ist ein Pt-haltiger Homogenkatalysator, besonders vorzugsweise ein Pt-Katalysator aus der Reihe "Karstedt-Katalysator", d.h. ein Platin(0)-1,3-Divinyl-1,1,3,3-Tetramethyldisiloxan-Komplex, insbesondere als "Karstedt-Katalysator" (optional in Xylol oder Toluol) mit einem Gehalt an Pt(0) von 0,01 bis 20 Gew.-%, oder eines Katalysators auf Basis Hexachloroplatin(IV)säure (auch "Speier-Katalysator" genannt). Beim erfindungsgemäßen Verfahren kann man aber auch vorteilhaft einen Heterogenkatalysator verwenden, wobei als Heterogenkatalysator ein Edelmetall, aufgebracht auf einem festen Katalysatorträger, vorzugsweise Pt geträgert auf Aktivkohle, geeignet ist.

So kann man beim erfindungsgemäßen Verfahren als Hydrosilylierungskatalysator den Platinkatalysator besonders vorteilhaft in homogener Phase einsetzen. Insbesondere setzt man dazu Pt(0)-Divinyltetramethyldisiloxan ("Karstedt-Katalysator") vorteilhaft ein, wobei der Katalysator geeigneterweise gelöst in einem inerten Lösemittel wie Xylol oder Toluol verwendet wird. Als bevorzugte inerte Löse- bzw. Verdünnungsmittel bieten sich beim vorliegenden Verfahren somit Toluol oder Xylol als besonders geeignet an. Bevorzugt setzt man beim erfindungsgemäßen Verfahren eine Katalysatorlösung mit einem Gehalt an Platin von 0,01 bis 20 Gew.-% ein.

Ferner setzt man beim erfindungsgemäßen Verfahren den Edelmetall-haltigen Homogenkatalysator vorteilhaft in einem molaren Verhältnis Edelmetall zu Hydrogentrialkoxysilan von 1 : 1 000 000 bis 1 : 100, bevorzugt von 1 : 100 000 bis 1 : 1 000, besonders bevorzugt von 1 : 50 000 bis 1 : 5 000, insbesondere von 1 : 30 000 bis 1 : 10 000.

Geeigneterweise verwendet man beim erfindungsgemäßen Verfahren vorteilhaft mindestnes ein Löse- bzw. Verdünnungsmittel aus der Reihe Xylol, Toluol, Heptan, Octan, Nonan, einem C7 bis C9-Kohlenwasserstoffgemisch oder auch ein entsprechendes, bereits verfügbares der besagten Hydrosilylierungsprodukte als solches. Insbesondere kann man beim vorliegenden Verfahren dem Reaktionsgemisch auch während der Umsetzung vorteilhaft ein inertes Löse- oder Verdünnungsmittel bzw. -gemisch zusetzten, beispielsweise aber nicht ausschließlich- Xylol, Toluol, Heptan, Octan, Nonan oder einem C7 bis C9-Kohlenwasserstoffgemisch.

Darüber hinaus kann man mindestens einen so genannten Promotor bzw. Cokatalysator, insbesondere aus der Reihe der organischer Säuren mit 2 bis 10 C-Atomen, beispielsweise -aber nicht ausschließlich- Essig-, Pentan- oder Hexansäure, beim erfindungsgemäßen Verfahren einsetzen.

Beim erfindungsgemäßen Verfahren führt man die Umsetzung bevorzugt bei einer Temperatur im Bereich von 80 bis 200 °C und bei einem Druck bis 4 bar abs. durch, vorzugsweise bei Umgebungsdruck bis 2 bar abs. sowie besonders bevorzugt bei einer Temperatur von 90 bis 180 °C, insbesondere von 100 bis 160 °C. Die Umsetzung läuft in der Regel exotherm ab, wobei eine Temperaturüberwachung und -regelung vorteilhaft ist.

Auch führt man das erfindungsgemäße Hydrosilylierungsverfahren in der Regel unter Schutzgasabdeckung durch, beispielsweise unter Stickstoff.

Geeigneterweise kann man das erfindungsgemäße Verfahren diskontinuierlich als auch kontinuierlich in einem Reaktorsystem durchführen.

Zur Gewinnung des Hydrosilylierungsprodukts (zuvor und nachfolgend auch kurz Produkt bzw. Zielprodukt oder Gemisch an Zielprodukten genannt) kann man im Rahmen des erfindungsgemäßen Verfahrens die Anteile noch vorliegender Komponenten mit einem Siedepunkt unterhalb 180 °C (1 bar) unter vermindertem Druck aus dem bei der Umsetzung erhaltenen Produktgemisch bzw. produkthaltigen Gemisch destillativ entfernen und das Zielprodukt bzw. ein Gemisch an Zielprodukten als Sumpfprodukt der Destillation oder -je nach Siedepunkt des Zielprodukts- auch als Kopfprodukt gewinnen. Falls man einen Heterogenkatalysator für die Umsetzung verwendet, trennt man diesen geeigneterweise vor der zuvor dargestellten destillativen Aufarbeitung ab, beispielsweise durch Filtration und/oder Zentrifugieren.

Im Allgemeinen kann man das erfindungsgemäße Verfahren so durchführen, dass man in einem Reaktorsystem, d.h. zum Beispiel einem Rührkessel- oder Rohrreaktorsystem, beispielsweise einer Rührkesselkaskade, arbeitet. Das Reaktorsystem kann beheizbar sowie kühlbar ausgeführt sein und geeigneterweise über eine Rühr- bzw. Mischvorrichtung und/oder eine Rückflusskühlung verfügen. Weiterhin kann das Reaktorsystem mit einem Inertgas, beispielsweise Stickstoff, sowie unter Druck betrieben werden kann. Ferner kann man die Reaktions- sowie Destillationsapparatur vor der Durchführung des vorliegenden Verfahrens mit getrocknetem Stickstoff spülen.

Zur Durchführung des erfindungsgemäßen Verfahrens können verschiedene Verfahrensvarianten zur Anwendung kommen.

So kann man das Hydrogentrialkoxysilan (auch kurz Hydrogenalkoxysilan genannt) und den Edelmatallkatalysator vorlegen, dieses Gemisch kann man optional mit einem inerten Lösemittel verdünnen und/oder einen Promotor zusetzen. Ein solches Gemisch kann man beispielsweise auf 40 bis 160°C vorwärmen und das Olefin gemäß Formel I zudosieren, wobei man die Umsetzung des so erhaltenen Reaktionsgemischs geeigneterweise bei einer Temperatur im Bereich von 80 bis 200 °C und bei einem Druck bis 4 bar abs. durchführt.

Man kann aber auch das Olefin gemäß Formel I vorlegen, optional mit einem geeigneten Lösemittel verdünnen, Katalysator sowie optional einen Promotor zusetzten, geeigneterweise die vorgelegte Zusammensetzung durchmischen, beispielsweise durch Rühren, erwärmen und das Hydrogentrialkoxysilan, optional verdünnt mit einem inerten Lösemittel, unter Durchmischung der Reaktionsmischung zudosieren.

Anschließend lässt man jeweils die Reaktionsmischung bzw. die bei der Umsetzung entstandene Produktmischung geeigneterweise nachreagieren und kann das so erhaltene Produktgemisch (auch Roh-Produkt genannt) aufarbeiten.

Sofern man einen Heterogenkatalysator zur Umsetzung verwendet, kann man diesen beispielsweise mittels Filter oder Zentrifuge von dem vorliegenden Produktgemisch abtrennen, optional recyclieren oder das Edelmetall zurückgewinnen.

Zur Gewinnung des Zielprodukts wird das bei der Umsetzung erhaltene Produktgemisch bzw. Roh-Produkt vom Heterogenkatalysator befreite Produktgemisch destillativ aufgearbeitet, wobei man die unter Normaldruck unterhalb 180°C flüchtigen Anteile möglichst produktschonend über die Gasphase entfernt, vorzugsweise destillativ unter vermindertem Druck (Vakuum), und das erfindnungsgemäße (Ziel-)Produkt, d.h. die erfindungsgemäßen Epoxy-funktionellen Alkoxysilane der Formeln II, III, IV, V oder VI oder ein Gemisch von mindestens zwei Epoxy-funktionellen Alkoxysilanen aus der Reihe der Formeln II, III, IV, V sowie VI, im Sumpf, d.h. als Sumpfprodukt, oder -je nach Siedepunkt der vorliegenden Produkte gemäß der Formeln II bis VI- auch als Kopfprodukt der verwendeten Destillationseinheit gewinnt.

Zusätzlich kann man das erfindungsgemäße Produkt oder ein Zwischenprodukt des Verfahrens, beispielsweise das Produktgemisch bzw. Umsetzungsprodukt vor der Destillation über ein Adsorptionsmittel, beispielsweise Aktivkohle, filtrieren oder mittels Membran behandeln, um optional vorliegende Edelmetallanteile eines eingesetzten Homogenkatalysators abzutrennen, zu recyclieren und/oder das Edelmetall zurückzugewinnen.

So sind die neuen, erfindungsgemäßen Epoxy-funktionellen Alkoxysilane der Formeln II, III, IV, V oder VI oder eines Gemischs von mindestens zwei Epoxy-funktionellen Alkoxysilanen aus der Reihe bereits oben angeführten der Formeln II, III, IV, V sowie VI vorteilhaft nach dem erfindungsgemäßen Verfahren erhältlich.

Darüber hinaus eignen sich erfindungsgemäße Epoxy-funktionelle Alkoxysilane der Formeln II, III, IV, V oder VI oder ein Gemisch von mindestens zwei Epoxy-funktionellen Alkoxysilanen aus der Reihe der Formeln II, III, IV, V sowie VI hinsichtlich Ihrer Verwendung vorteilhaft -aber nicht ausschließlich- für die Modifizierung und/oder Beschichtung von Oberflächen, für die Beschichtung von Glasfasern, für die Beschichtung von Metallen und Metalllegierungen, zum Schutz vor Korrosion, für die Silanisierung von Füllstoffen und Pigmenten, für die Herstellung von Kleb- und Dichtmassen, für die Herstellung von Kompositen und/oder Compounds, zur Herstellung von Korrosionsschutzmitteln, als Vernetzer, als Haftvermittler, als Primer sowie als Zusatzstoff für Farben und Lacke.

Die vorliegende Erfindung wird durch die nachfolgenden Beispiele näher erläutert, ohne den Gegenstand der Erfindung zu beschränken.

### Beispiele:

### Apparatur/Versuchsdurchführung:

Die nachfolgenden Versuche wurden wie folgt durchgeführt:
Neoallyl-AGE, TMOS, Säure und Karstedt-Katalysator wurden in einem Rührreaktor vorgelegt. Das Reaktionsgemisch wurde unter Rühren innerhalb von ca. 30 min. auf 160°C (Sumpftemperatur) aufgeheizt. Nach Erreichen der Sumpftemperatur von 160 °C wurde das Reaktionsgemisch für weitere 90 Min. auf 160 °C gehalten. Danach erfolgte die Abkühlung des Reaktions- bzw. Produktgemischs und anschließende Probenahme (so genannte Roh-Probe).

Das erhaltene Rohprodukt wurde anschließend unter produktschonenden Bedingungen (Vakuum) fraktioniert destilliert und die Zielprodukte in einer fraktionierten Destillation als Kopf- bzw. Sumpfprodukte gewonnen.

### Einsatzstoffe/Abkürzungen:

| | |
|---|---|
| Karstedt-Katalysator | Fa. Heraeus, Pt(0)-Gehalt 20,42 Gew.-% |
| Essigsäure | Fa. Sigma-Aldrich, Reinheit ≥ 99% |
| 2-Ethylhexansäure | Fa. ABCR; Reinheit 99% (auch 2-EHsre. genannt) |
| Sre. | Abkürzung für "Säure" |
| TMOS | Hydrogentrimethoxysilan, Reinheit: 98% |
| Neoallyl-AGE | NEOALLYL™E20G, Fa. Osaka Soda, Reinheit >96% |
| HS | Hochsieder |

### Analyseverfahren:

### Bestimmung von Produktzusammensetzungen mittels Gaschromatographie:

Zusammensetzung Roh-Probe (Probe aus dem Rohprodukt nach Umsetzung)
Gerät: Agilent Technologies, 6890N GC System
Säule:19095J-123 HP5; 30m/0,53mm/2.65µm
Temperatur-Programm: 100°C-2min-10°C/min-275°C-30min

### Beispiel 1

### Mit 2-Ethylhexansäure

- ohne org. Lösemittel
- Neoallyl-AGE/TMOS [mol/mol] = 1/2
- Pt-Konz. = 2,2 Gew.-ppm (bezogen auf die gesamte Reaktionsmasse)
- 2-Ethylhexansäure, Konz. = 0,57 Gew.-% (bezogen auf die gesamte Reaktionsmasse)

Das nach Umsetzung erhaltene Produktgemisch hatte die folgende Zusammensetzung [Angaben in Flächen-% gemäß GC-Analyse]:

| MeOH | TMOS | Tetramethoxy -silan | NeoallyI-AGE | Produkt(e) gemäß Formel IV, V und VI | Produkt gemäß Formel II | Produkt gemäß Formel III | HS |
|---|---|---|---|---|---|---|---|
| [%] | [%] | [%] | [%] | [%] | [%] | [%] | [%] |
| 0,5 | 2,8 | 4,1 | 1,0 | 67,8 | 12,6 | 5,7 | 5,4 |

### Beispiel 2

### Mit Essigsäure

- ohne org. Lösemittel
- Neoallyl-AGE/TMOS [mol/mol] = 1/2
- Pt-Konz. = 2,6 Gew.-ppm (bezogen auf die gesamte Reaktionsmasse)
- Essigsäure, Konz. = 0,29 Gew.-% (bezogen auf die gesamte Reaktionsmasse)

Das nach Umsetzung erhaltene Produktgemisch hatte die folgende Zusammensetzung [Angaben in Flächen-% gemäß GC-Analyse]:

| MeOH | TMOS | Tetramethoxy -silan | NeoallyI-AGE | Produkt(e) gemäß Formel IV, V und VI | Produkt gemäß Formel II | Produkt gemäß Formel III | HS |
|---|---|---|---|---|---|---|---|
| [%] | [%] | [%] | [%] | [%] | [%] | [%] | [%] |
| 0,4 | 4,2 | 4,9 | 0,7 | 61,5 | 15,4 | 6,8 | 5,1 |

## Patentansprüche

1. Epoxy-funktionelle Alkoxysilane der Formeln II, III, IV, V und/oder VI 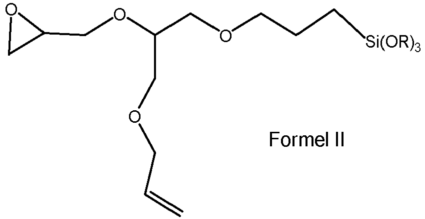 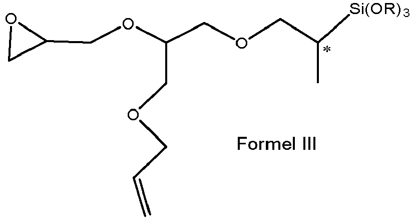 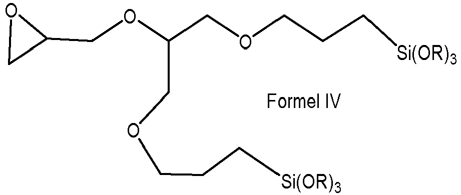 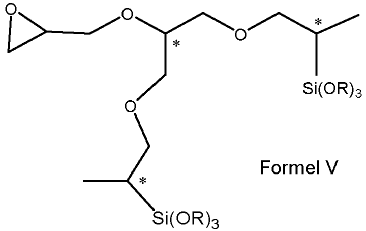 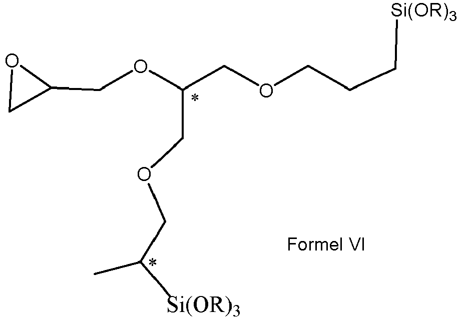 wobei R für eine Methyl- oder Ethylgruppe steht.

2. Verfahren zur Herstellung mindestens eines Epoxy-funktionellen Alkoxysilans der Formeln II, III, IV, V oder VI oder eines Gemisches von mindestens zwei Epoxy-funktionellen Alkoxysilanen der Formeln II, III, IV, V und/oder VI gemäß Anspruch 1, indem man
- eine Epoxy-funktionelle Verbindung der Formel I 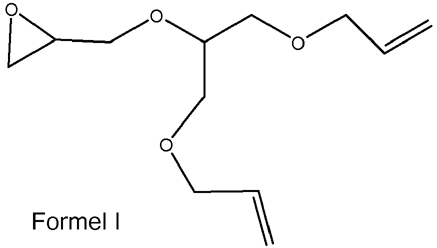
- mit einem Hydrogentrialkoxysilan
- in Gegenwart eines Edelmetall-haltigen Hydrosilylierungskatalysators,
- optional unter Zusatz mindestens eines Löse- bzw. Verdünnungsmittels
- sowie optional unter Zusatz eines Promotors
- umsetzt und
- anschließend das Hydrosilylierungsprodukt gewinnt.

3. Verfahren nach Anspruch 2,
**dadurch gekennzeichnet,**
**dass** man als Hydrogentrialkoxysilan Hydrogentrimethoxysilan oder Hydrogentriethoxysilan einsetzt.

4. Verfahren nach Anspruch 2,
**dadurch gekennzeichnet,**
**dass** man die Verbindung gemäß Formel I zu Hydrogentrialkoxysilan in einem molaren Verhältnis von 1 zu 0,8 bis 1 zu 100 ein, vorzugsweise 1 zu 1,8 bis 1 zu 50, besonders vorzugsweise 1 zu 2 bis 1 zu 20, ganz besonders vorzugsweise 1 zu 2,2 bis 1 zu 10, insbesondere 1 zu 2,5 bis 1 zu 5 einsetzt.

5. Verfahren nach mindestens einem der Ansprüche 2 bis 4,
**dadurch gekennzeichnet,**
**dass** man die Umsetzung in Gegenwart eines Edelmetall-haltigen Hydrosilylierungskatalysators aus der Reihe Pt, Pd, Rh durchführt, wobei dieser homogen oder heterogen vorliegen kann, bevorzugt ist ein Pt-haltiger Homogenkatalysator, besonders vorzugsweise einen Pt-Katalysator aus der Reihe "Karstedt-Katalysator", d.h. ein Platin(0)-1,3-Divinyl-1,1,3,3-Tetramethyldisiloxan-Komplex, insbesondere als "Karstedt-Katalysator", optional in Xylol oder Toluol, mit einem Gehalt an Pt(0) von 0,01 bis 20 Gew.-%, oder eines Katalysator auf Basis Hexachloroplatin(IV)säure, oder als Heterogenkatalysator ein Edelmetall aufgebracht auf einem festen Katalysatorträger, vorzugsweise Pt geträgert auf Aktivkohle.

6. Verfahren nach mindestens einem der Ansprüche 2 bis 5,
**dadurch gekennzeichnet,**
**dass** man den Edelmetall-haltigen Homogenkatalysator in einem molaren Verhältnis Edelmetall zu Hydrogenalkoxysilan von 1 : 1 000 000 bis 1 : 100 einsetzt.

7. Verfahren nach mindestens einem der Ansprüche 2 bis 6,
**dadurch gekennzeichnet,**
**dass** man als Löse- bzw. Verdünnungsmittel mindestens eines aus der Reihe Xylol, Toluol, Heptan, Octan, Nonan oder einem C7 bis C9-Kohlenwasserstoff-gemisch verwendet.

8. Verfahren nach mindestens einem der Ansprüche 2 bis 7,
**dadurch gekennzeichnet,**
**dass** man mindestens einen Promotor, bevorzugt aus der Reihe der organischen Säuren mit 2 bis 10 C-Atomen, insbesondere Essig-, Pentan- oder Hexansäure, einsetzt.

9. Verfahren nach einem der Ansprüche 2 bis 8,
**dadurch gekennzeichnet,**
**dass** man die Umsetzung bei einer Temperatur im Bereich von 80 bis 200 °C und bei einem Druck bis 4 bar abs. durchführt.

10. Verfahren nach einem der Ansprüche 2 bis 9,
**dadurch gekennzeichnet,**
**dass** man die Anteile noch vorliegender Komponenten mit einem Siedepunkt unterhalb 180 °C (1 bar) unter vermindertem Druck aus dem bei der Umsetzung erhaltenen Produktgemisch destillativ entfernt und das Zielprodukt bzw. ein Gemisch an Zielprodukten als Sumpfprodukt der Destillation oder -je nach Siedepunkt- als Kopfprodukt der verwendeten Destillationseinheit gewinnt und falls man einen Heterogenkatalysator für die Umsetzung verwendet, man diesen vor der zuvor dargestellten destillativen Aufarbeitung abgetrennt, beispielsweise durch Filtration und/oder Zentrifugieren.

11. Verfahren nach einem der Ansprüche 2 bis 10,
**dadurch gekennzeichnet,**
**dass** man das Verfahren diskontinuierlich in einem Rührkesselreaktor durchführt.

12. Gemische von mindestens zwei Epoxy-funktionellen Alkoxysilanen aus der Reihe der Formeln II, III, IV, V sowie VI gemäß Anspruch 1.

13. Verwendung eines Epoxy-funktionelles Alkoxysilan der Formel II, III, IV, V oder VI oder eines Gemisches von mindestens zwei Epoxy-funktionellen Alkoxysilanen aus der Reihe der Formeln II, III, IV, V sowie VI gemäß Anspruch 1 oder 12 für die Modifizierung und/oder Beschichtung von Oberflächen, für die Beschichtung von Glasfasern, für die Beschichtung von Metallen und Metalllegierungen, zum Schutz vor Korrosion, für die Silanisierung von Füllstoffen und Pigmenten, für die Herstellung von Kleb- und Dichtmassen, für die Herstellung von Kompositen und/oder Compounds, zur Herstellung von Korrosionsschutzmittel, als Vernetzer, als Haftvermittler, als Primer, als Zusatzstoff für Farben und Lacke.

## Claims

1. Epoxy-functional alkoxysilanes of formulae II, III, IV, V and/or VI 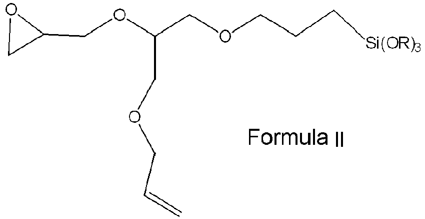 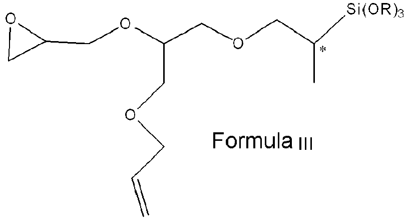 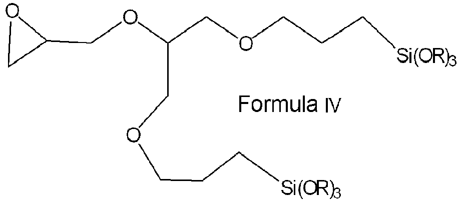 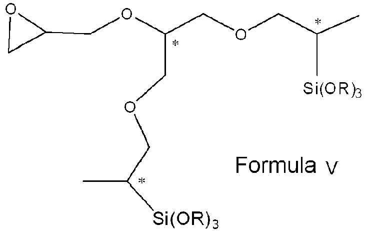 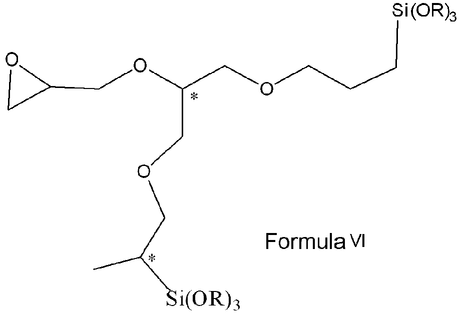 wherein R represents a methyl or ethyl group.

2. Process for producing at least one epoxy-functional alkoxysilane of formulae II, III, IV, V or VI or a mixture of at least two epoxy-functional alkoxysilanes of formulae II, III, IV, V and/or VI according to Claim 1 by reacting
- an epoxy-functional compound of formula I 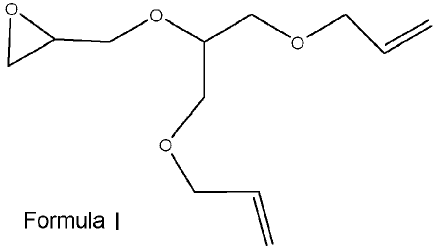
- with a hydrogentrialkoxysilane
- in the presence of a noble-metal-containing hydrosilylation catalyst
- optionally with addition of at least one solvent/diluent
- and optionally with addition of a promoter
and
- subsequently obtaining the hydrosilylation product.

3. Process according to Claim 2,
**characterized in that**
the hydrogentrialkoxysilane employed is hydrogentrimethoxysilane or hydrogentriethoxysilane.

4. Process according to Claim 2,
**characterized in that**
the compound of formula I relative to hydrogentrialkoxysilane is employed in a molar ratio of 1 : 0.8 to 1 : 100, preferably 1 : 1.8 to 1 : 50, particularly preferably 1 : 2 to 1 : 20, very particularly preferably 1 : 2.2 to 1 : 10, in particular 1 : 2.5 to 1 : 5.

5. Process according to at least one of Claims 2 to 4,
**characterized in that**
the reaction is performed in the presence of a noble-metal-containing hydrosilylation catalyst from the group of Pt, Pd, Rh, wherein said catalyst may be homogeneous or heterogeneous, preference being given to a Pt-containing homogeneous catalyst, particularly preferably a Pt catalyst from the group of "Karstedt's catalyst", i.e. a platinum(0) 1,3-divinyl-1,1,3,3-tetramethyldisiloxane complex, in particular "Karstedt's catalyst", optionally in xylene or toluene, having a content of Pt(0) of 0.01% to 20% by weight, or a catalyst based on hexachloroplatinic(IV) acid or as a heterogeneous catalyst a noble metal applied to a solid catalyst support, preferably Pt supported on activated carbon.

6. Process according to at least one of Claims 2 to 5,
**characterized in that**
the noble-metal-containing homogeneous catalyst is employed in a noble metal to hydrogenalkoxysilane molar ratio of 1 : 1 000 000 to 1 : 100.

7. Process according to at least one of Claims 2 to 6,
**characterized in that**
the solvent/diluent used is at least one from the group of xylene, toluene, heptane, octane, nonane or a C7 to C9 hydrocarbon mixture.

8. Process according to at least one of Claims 2 to 7,
**characterized in that**
at least one promoter, preferably from the group of organic acids having 2 to 10 carbon atoms, in particular acetic, pentanoic or hexanoic acid, is employed.

9. Process according to any of Claims 2 to 8,
**characterized in that**
the reaction is performed at a temperature in the range from 80°C to 200°C and at a pressure up to 4 bar abs.

10. Process according to any of Claims 2 to 9,
**characterized in that**
the proportions of still-present components having a boiling point below 180°C (1 bar) are removed from the product mixture obtained in the reaction by distillation under reduced pressure and the target product/a mixture of target products is obtained as bottom product from the distillation or else - depending on the boiling point - as top product from the distillation unit used and if a heterogeneous catalyst is used for the reaction this is removed before the above-described distillative workup, for example by filtration and/or centrifuging.

11. Process according to any of Claims 2 to 10,
**characterized in that**
the process is performed discontinuously in a stirred tank reactor.

12. Mixtures of at least two epoxy-functional alkoxysilanes from the group of formulae II, III, IV, V and VI according to Claim 1.

13. Use of an epoxy-functional alkoxysilane of formula II, III, IV, V or VI or a mixture of at least two epoxy-functional alkoxysilanes from the group of formulae II, III, IV, V and VI according to Claim 1 or 12
for modification and/or coating of surfaces, for coating of glass fibres, for coating of metals and metal alloys, for protection from corrosion, for silanization of fillers and pigments, for production of adhesives and sealants, for production of composites and/or compounds, for production of corrosion protectants, as crosslinkers, as adhesion promoters, as primers and as an additive for paints and lacquers.

## Revendications

1. Alcoxysilanes à fonctionnalité époxy des formules II, III, IV, V et/ou VI 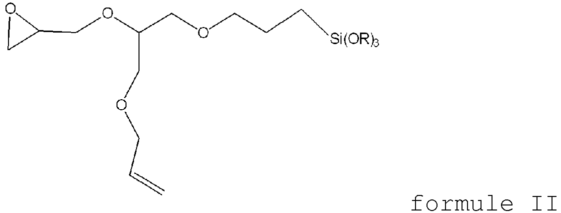 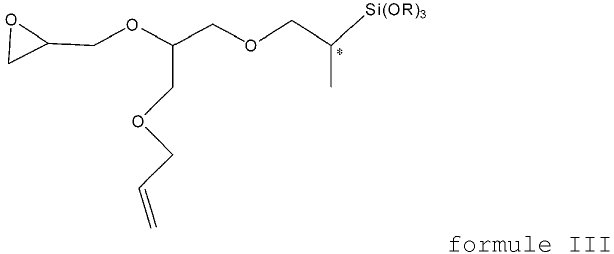 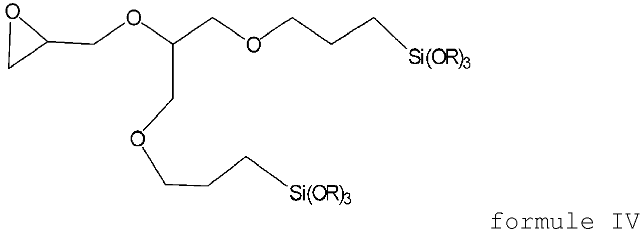 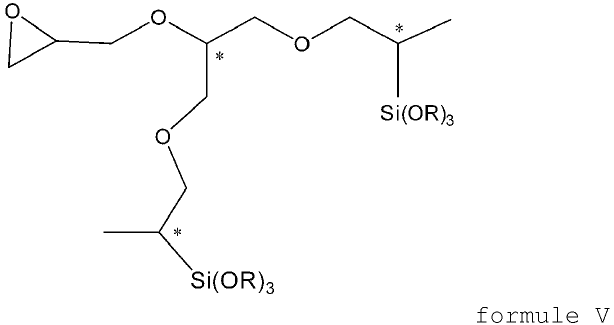 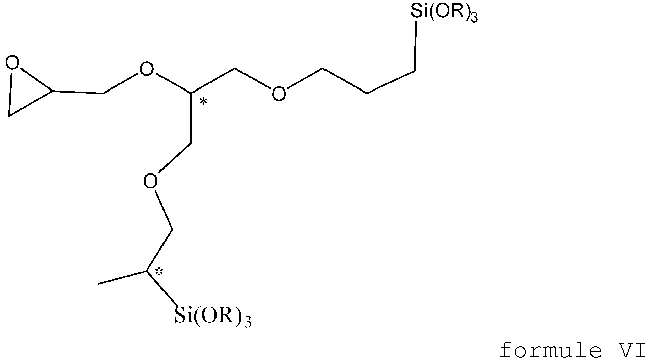 R représentant un groupe méthyle ou éthyle.

2. Procédé pour la préparation d'au moins un alcoxysilane à fonctionnalité époxy des formules II, III, IV, V ou VI ou d'un mélange d'au moins deux alcoxysilanes à fonctionnalité époxy des formules II, III, IV, V et/ou VI selon la revendication 1,
où l'on transforme
- un composé à fonctionnalité époxy de formule I 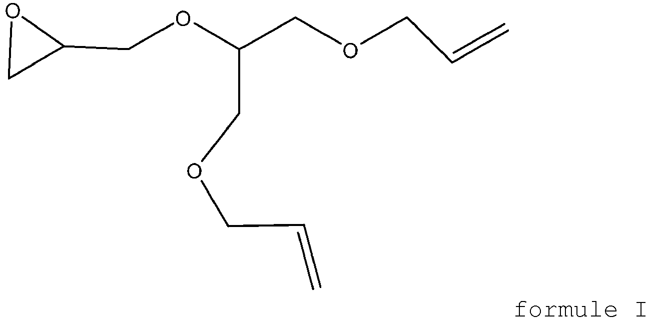
- avec un hydrogénotrialcoxysilane
- en présence d'un catalyseur d'hydrosilylation contenant un métal noble,
- éventuellement avec ajout d'au moins un solvant ou, selon le cas, d'un diluant
- ainsi qu'éventuellement avec ajout d'un promoteur
- et
- on obtient ensuite le produit d'hydrosilylation.

3. Procédé selon la revendication 2,
**caractérisé en ce que**
l'on utilise de l'hydrogénotriméthoxysilane ou de l'hydrogénotriéthoxysilane en tant qu'hydrogénotrialcoxysilane.

4. Procédé selon la revendication 2,
**caractérisé en ce que**
l'on utilise le composé selon la formule I et l'hydrogénotrialcoxysilane en rapport molaire de 1 à 0,8 jusqu'à 1 à 100, de préférence de 1 à 1,8 jusqu'à 1 à 50, particulièrement de préférence de 1 à 2 jusqu'à 1 à 20, tout particulièrement de préférence de 1 à 2,2 jusqu'à 1 à 10, en particulier de 1 à 2,5 jusqu'à 1 à 5.

5. Procédé selon au moins l'une des revendications 2 à 4,
**caractérisé en ce que**
l'on réalise la transformation en présence d'un catalyseur d'hydrosilylation contenant un métal noble de la série Pt, Pd, Rh, celui-ci pouvant se trouver sous forme homogène ou hétérogène, préférablement étant un catalyseur homogène contenant du Pt, particulièrement de préférence un catalyseur de Pt de la série « catalyseur de Karstedt », c'est-à-dire un complexe platine(0)-1,3-divinyl-1,1,3,3-tétraméthyldisiloxane, en particulier en tant que « catalyseur de Karstedt », éventuellement dans du xylène ou du toluène, avec une teneur en Pt(0) de 0,01 à 20 % en poids, ou un catalyseur à base d'acide hexachloroplatin(VI)-ique, ou, en tant que catalyseur hétérogène, un métal noble appliqué sur un support solide de catalyseur, de préférence du Pt supporté sur du charbon actif.

6. Procédé selon au moins l'une des revendications 2 à 5,
**caractérisé en ce que**,
l'on utilise le catalyseur homogène contenant un métal noble en un rapport molaire de métal noble à hydrogénoalcoxysilane de 1:1.000.000 à 1:100.

7. Procédé selon au moins l'une des revendications 2 à 6,
**caractérisé en ce que**,
l'on utilise au moins un parmi la série xylène, toluène, heptane, octane, nonane ou un mélange d'hydrocarbure en C₇₋₉, en tant que solvant ou, selon le cas, en tant que diluant.

8. Procédé selon au moins l'une des revendications 2 à 7,
**caractérisé en ce que**,
l'on utilise au moins un promoteur, préférablement de la série des acides organiques comportant 2 à 10 atomes de C, en particulier l'acide acétique, l'acide pentanoïque ou l'acide hexanoïque.

9. Procédé selon l'une quelconque des revendications 2 à 8,
**caractérisé en ce que**,
l'on réalise la transformation à une température dans la plage de 80 à 200 °C et à une pression jusqu'à 4 bars abs.

10. Procédé selon l'une quelconque des revendications 2 à 9,
**caractérisé en ce que**,
l'on élimine du mélange de produit obtenu lors de la transformation les parts des composants restants comportant un point d'ébullition inférieur à 180 °C (1 bar) par distillation sous pression réduite et on obtient le produit cible ou, selon le cas, un mélange de produits cibles, en tant que produit de cuve de la distillation ou -selon le point d'ébullition - en tant que produit de tête de l'unité de distillation utilisée et au cas où l'on utilise un catalyseur hétérogène pour la transformation, on le sépare avant le traitement par distillation décrit précédemment, par exemple par filtration et/ou centrifugation.

11. Procédé selon l'une quelconque des revendications 2 à 10,
**caractérisé en ce que**,
l'on réalise le procédé de manière discontinue dans un réacteur à cuve agitée.

12. Mélanges d'au moins deux alcoxysilanes à fonctionnalité époxy des formules II, III, IV, V ainsi que VI selon la revendication 1.

13. Utilisation d'un alcoxysilane à fonctionnalité époxy de formules II, III, IV, V ou VI ou d'un mélange d'au moins deux alcoxysilanes à fonctionnalité époxy parmi la série des formules II, III, IV, V ainsi que VI selon la revendication 1 ou 12 pour la modification et/ou le revêtement de surfaces, pour le revêtement de fibres de verre, pour le revêtement de métaux et d'alliages métalliques, pour la protection contre la corrosion, pour la silanation de charges et de pigments, pour la préparation de masses d'adhésion et de masses d'étanchéification, pour la préparation de composites et/ou de compounds, pour la préparation d'agents de protection contre la corrosion, en tant qu'agent réticulant, en tant qu'agent adhésif, en tant qu'apprêt, en tant qu'additif pour des colorants et des laques.
